# EUROPEAN PATENT APPLICATION

(11) **EP 4 455 624 A1**
(43) Date of publication of application: **30.10.2024**
(21) Application number: 21969089.8
(22) Date of filing: 24.12.2021
(51) Int. Cl.: G01J 1/02, G01J 1/04

(54) **SENSING SENSOR**

(71) Applicant: Optex Co., Ltd., Otsu-shi, Shiga 520-0101 (JP)
(72) Inventor: TOMOOKA, Hiroyuki, Otsu-shi, Shiga 520-0101 (JP); NOGUCHI, Michinori, Otsu-shi, Shiga 520-0101 (JP)
(74) Representative: Müller Hoffmann & Partner
(86) International application number: PCT/JP2021/048368
(87) International publication number: WO 2023/119659

(57) **Abstract**

In order to make it possible for a sensing sensor 100 to secure the appearance of the product while enabling detection of various masking materials, such as those with low reflectance or in sheet form, the sensing sensor 100 comprises a sensor part 10 that detects an object to be detected and a masking detection structure 30 that detects a masking material that nullifies a detection function of the sensor part, and the masking detection structure 30 comprise a light source 31 and a light receiver 32 housed in a casing 20 together with the sensor part 10, and a light transmission window 33 that closes an opening formed in the casing 20, and the light transmitting window 33 has a concave portion 40 recessed toward an inside of the casing 20, and light emitted from the light source 31 is transmitted from the inside of the casing 20 to the outside thereof through the concave portion 40.

## Description

### Technical Field

This invention relates to a sensing sensor that detects a human body and other objects.

### Background Art

As shown in Patent Document 1, there are sensing sensors of this type that are configured to be able to detect masking materials such as paint or a shielding material in order to prevent a function of detecting human body from being disabled by, for example, being sprayed with paint or being covered with a shielding material.

A conventional example of a configuration of masking detection can be classified into two, one is to emit light from inside of a casing toward an area where a masking material is to be detected (hereinafter also referred to as "detection area"), and the other is to emit light from outside of the casing toward the detection area.

More concretely, the first one detects a masking material by emitting light from a light source housed in the casing toward the detection area and in case that there is a masking material, the masking material is detected by receiving the light that is reflected by the masking material and that returns into the casing.

In this method, since the light reflected by the masking material is utilized to detect the masking material, if black paper with low reflectance is pasted exactly on the detection area, there is a problem such that a change of a light receiving amount depending on presence or absence of the masking material is extremely small so that it becomes difficult to detect the masking material.

On the other hand, the other method detects the masking material by guiding the light from the light source housed in the casing to the outside of the casing by the use of a light guiding member, by leading the light to the detection area, and by receiving the light that transmits through the detection area and that returns to the casing.

In this method, in case that there is a masking material, since at least a part of the received light is blocked, it is possible to detect the masking material even though the masking material has low reflectance. Furthermore, since a part of the light guide member protrudes from the casing, the sheet-shaped masking material will not be laminated tightly. Then, changes in the amount of the received light depending on the presence or absence of the masking material can be easily caused so that it is possible to detect the sheet-shaped masking material.

However, this method requires the light guiding member protrude from the outside of the casing, thereby causing a problem that the appearance of the product is spoiled.

### Prior art documents

### Patent document

Patent document 1: Japanese Unexamined Patent Application Publication No. 11-250362

### Summary of the Invention

### Problems to be solved by the invention

This invention is made to solve the above-mentioned problems at once, and the problem is to secure an appearance of the product while making it possible to detect various types of masking materials, such as materials having low reflectance and sheet-shaped materials.

A sensing sensor in accordance with the present claimed invention comprises a sensor part that detects an object to be detected and a masking detection structure that detects a masking material that nullifies a detection function of the sensor part, and is characterized by that the masking detection structure comprises a light source and a light receiver housed in a casing together with the sensor part, and a light transmission window that closes an opening formed in the casing, and the light transmitting window has a concave portion recessed toward an inside of the casing, and light emitted from the light source is transmitted from the inside of the casing to an outside thereof through the concave portion.

In accordance with the sensing sensor having the above-mentioned configuration, since the light emitted from the light source is transmitted through the concave portion of the light transmission window from the inside of the casing to the outside thereof, even though the sheet-shaped masking material having low reflectance is laminated tightly to the casing, the concave portion is covered so that changes in a light receiving amount is likely undergo and it becomes possible to detect various masking materials.

In addition, since the masking material is detected by making use of the concave portion, there is no need for a light guiding member to protrude from the casing so that the appearance of the product can be secured.

A configuration can be represented that at least a part of the light emitted from the light source is transmitted from the inside of the casing to the outside thereof through one of opposing surfaces that form the concave portion and that face each other, and the light is transmitted from the outside of the casing to the inside thereof through the other of the opposing surfaces.

In accordance with this configuration, it is possible to detect various kinds of masking materials such as paint that is applied to an opposing surface of the concave portion.

There are masking materials some of which increases a light receiving amount by the light receiver and some of which decreases a light receiving amount by the light receiver depending on a quality of a material or the like.

Then, it is preferable that the masking detection structure is configured so that at least a part of the light emitted from the light source is guided to the light receiver in a normal state in which the masking material is not detected.

In accordance with such a configuration, it is possible to detect even masking materials that increase or decrease the light receiving amount.

It is preferable that a step portion is formed on the above-mentioned opposing surfaces of the concave portion.

In accordance with this configuration, since multiple optical paths can be formed between the light source and the light receiver, it is possible to detect much more varieties of masking materials.

Since various components are housed in the casing, restrictions may be imposed on placement and orientation of the light source and light receiver. It is not always possible to guide the light from the light source to the area of the masking material to be detected, nor is it always possible to guide the light from that area back into the casing to the receiver. Although it is conceivable to place the light source and the light receiver by lifting them up near the area, this requires a structure to hold the light source and receiver near the area, resulting in higher costs.

Then, it is preferable that the masking detection structure further comprises a reflecting member that reflects the light emitted from the light source toward the concave portion, or a reflecting member that reflects the light transmitted from the outside of the casing to the inside thereof through the concave portion toward the light receiver.

In accordance with this configuration, even though restrictions are imposed on the placement and the orientation of the light source and the light receiver, it is possible to surely guide the light from the light source to the area of the masking material to be detected, to surely guide the light from that area back into the casing to the light receiver.

### Effects of the Invention

According to the present claimed invention, it is possible to secure the appearance of the product while enabling detection of various masking materials such as those with low reflectance or in sheet form.

### Brief Description of the Drawings

[Fig. 1] A schematic diagram indicating an overall configuration of a sensing sensor in one embodiment of the invention.
[Fig. 2] A schematic diagram indicating an internal structure of the sensing sensor in this embodiment.
[Fig. 3] An enlarged schematic diagram of a masking detection structure in this embodiment.
[Fig. 4] A schematic diagram indicating an optical path of detection light of the masking detection structure in this embodiment.
[Fig. 5] A schematic diagram indicating a concave portion and a second masking detection structure in this embodiment.
[Fig. 6] A schematic diagram indicating an internal structure of the sensing sensor of the other embodiment.
[Fig. 7] A schematic diagram indicating the internal structure of the sensing sensor of a further different embodiment.

### Description of the code

- 100: sensing sensor
- 10: sensor part
- 20: casing
- 30: masking detection structure
- 31: light source
- 32: light receiver
- 33: light transmitting window
- 20h: opening
- 40: concave portion
- 41: first facing surface
- 411: step part
- 50: first reflecting member
- 60: second reflecting member

### Best mode for embodying the invention

A sensing sensor in one embodiment of the present claimed invention will be explained with reference to drawings.

### [Configuration of the sensing sensor 100]

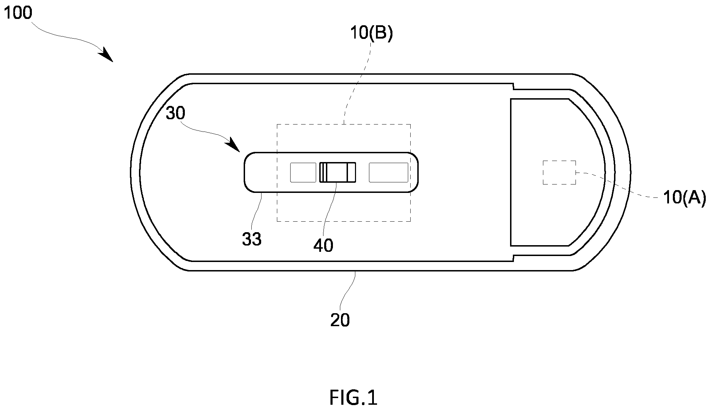

As shown in Fig. 1, the sensing sensor 100 in this embodiment comprises a sensor part 10 that is installed indoors or outdoors and that detects an object to be detected such as a human body and is used for crime prevention in buildings such as houses, apartments, and buildings.

A concrete detection method is not particularly limited and may be changed as needed. The sensing sensor 100 in this embodiment comprises the sensor parts 10 of a plurality of mutually different detection methods that detect the object to be detected.

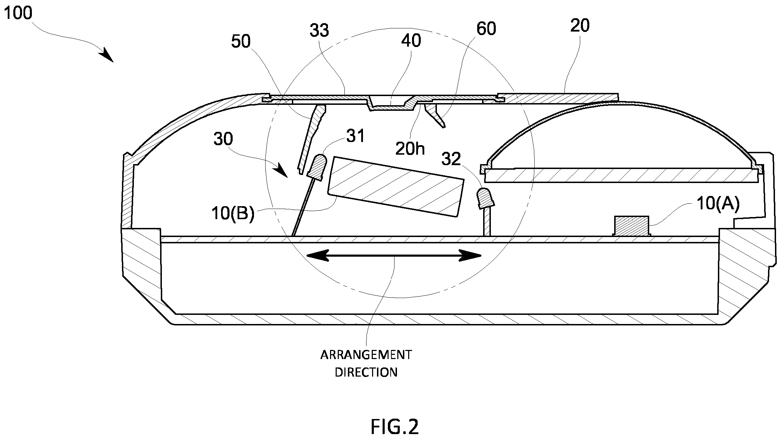

More concretely, as shown in Fig. 1 and Fig. 2, the sensing sensor 100 of this embodiment is formed by combining a sensor part 10 (A) of a passive infrared detection method and a sensor part 10 (B) of a microwave detection method, and these sensor parts 10 (A) and (B) are housed in a casing 20.

The sensor part 10 (A) using the passive infrared detection method has a pyroelectric element that detects far-infrared rays emitted by the object to be detected such as a human body that has entered an alarm area, and outputs a detection signal when the electric signal indicating the amount of light received by this pyroelectric element changes by more than a certain level.

The sensor part 10 (B) of the microwave detection method detects the presence of the object to be detected by an amplitude change of a beat signal generated from frequency difference between a transmitted wave and a reflected wave.

The sensing sensor 100 is configured to be able to detect a masking material that nullifies the detection function by the above-mentioned sensor part 10. In this embodiment, a masking detection structure 30 provided for the above-mentioned sensor part 10 (B) of the microwave detection method is unique and will be described in detail below.

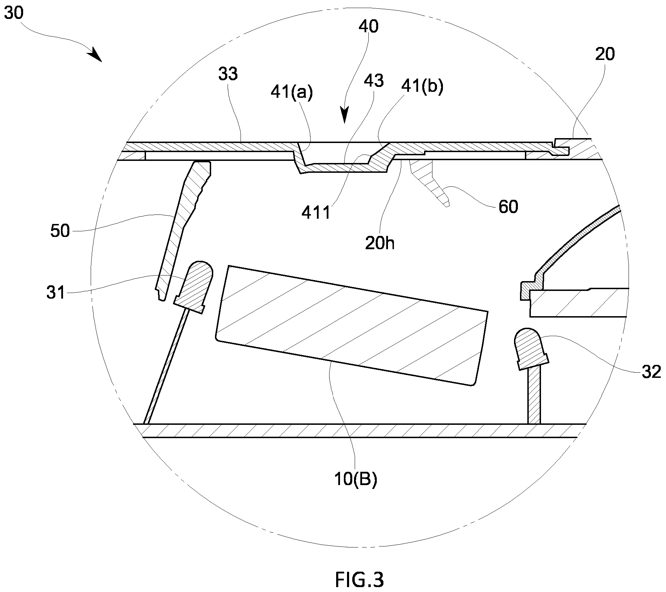

The masking detection structure 30 detects masking materials such as, for example, black paper and paint and has a light source 31 and a light receiver 32 housed in the casing 20 together with the sensor part 10, and a light transmission window 33 provided in the casing 20, as shown in Fig. 2 and Fig. 3.

The light source 31 emits light (hereinafter also referred to as "detection light") for detecting the masking material, and is concretely an LED that emits, for example, infrared light as the detection light.

The light receiver 32 receives the detection light emitted from the light source 31, and is, for example, an infrared detector that outputs a detection signal indicating a light receiving amount.

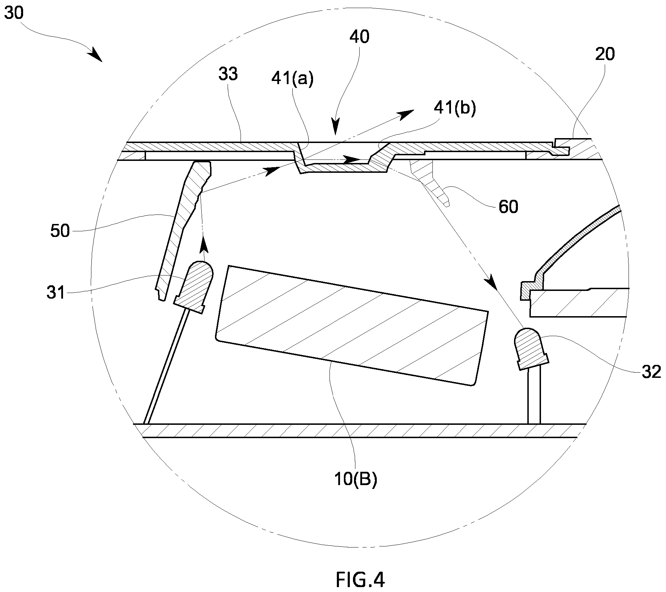

As shown in Fig. 3 and Fig. 4, the light transmission window 33 closes an opening 20h formed in the casing 20 and allows at least a part of the detection light emitted from the light source 31 to be transmitted from the inside of the casing 20 to the outside thereof. The opening 20h is formed in the detection area where the masking material is to be detected, in other words, the light transmission window 33 is provided in the detection area.

As shown in Fig. 4, the masking detection structure 30 of this embodiment is configured so that at least a part of the detection light emitted from the light source 31 is guided from the inside of the casing 20 to the outside thereof through the light transmission window 33, and at least a part of that detection light is guided from the outside through the light transmission window 33 and back to the inside of the casing 20 again to the light receiver 32. In other words, in this embodiment, the light transmission window 33 is provided on an optical path of the detection light from the light source 31 to the light receiver 32. In Fig. 4, a part of the optical path from the light source 31 to the light receiver 32 is shown. In this embodiment, a plurality of optical paths are formed between the light source 31 and the light receiver 32, however, these are omitted for the sake of explanation.

In accordance with the above-mentioned configuration, the masking detection structure 30 outputs the detection signal indicating a reference light receiving amount that is greater than a zero value from the light receiver 32 at a normal time when the masking material is not detected.

The masking detection structure 30 outputs an alarm signal indicating that the masking material is detected in case that the light receiving amount indicated by the detection signal output from the light receiver 32 exceeds a predetermined upper limit light amount greater than the reference light receiving amount or in case that the light receiving amount falls below the predetermined lower limit light amount less than the reference light receiving amount.

However, the masking detection structure 30 may be configured so that the detection light guided from the inside of the casing 20 to the outside thereof through the light transmission window 33 does not return to the inside of the casing 20 in the normal state, and the detection signal from the light receiver 32 indicates a zero value.

As shown in Fig. 2 to Fig. 4, the light transmission window 33 of this embodiment is provided to face the sensor section 10 and has an elongated shape along an arrangement direction of the light source 31 and the light receiver 32 in a front view of the sensing sensor 100 and is concretely a plate-shaped member having light transmittance.

An outer surface of the light transmission window 33 is provided to be flush or nearly flush with an outer surface of the casing 20 without protruding outwardly from the outer surface of the casing 20. However, in consideration of the design of the sensing sensor 100, the light transmission window 33 may partially or entirely protrude outwardly from the outer surface of the casing 20. As an embodiment represented is that the casing 20 is curved in such a way that the casing 20 rises outward and the light transmission window 33 is provided at its apex, or that the light transmission window 33 itself is curved in such a way that the transmission window 33 rises outward from the outer surface of the casing 20.

As shown in Fig. 2 through Fig. 4, the light transmission window 33 has a concave portion 40 that is concave toward the inside of the casing 20 and is configured so that the detection light emitted from the light source 31 through the concave portion 40 is transmitted from the inside of the casing 20 to the outside thereof.

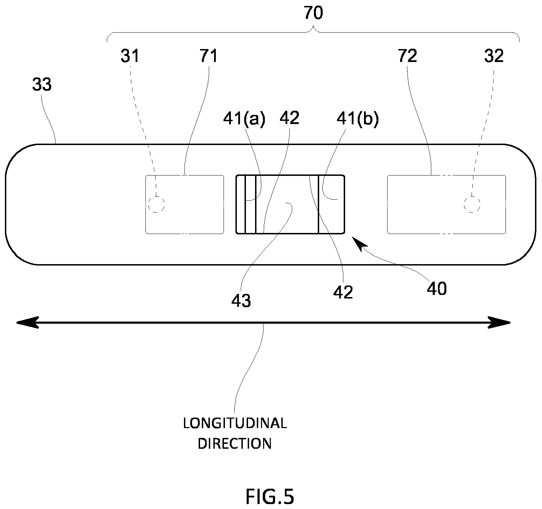

With explained in more detail, as shown in Fig. 5, the concave portion 40 has a depressed tank shape with respect to a major portion of the outer surface of the sensing sensor 100 and has an approximately rectangular shape in a front view of the sensing sensor 100. As shown in Fig. 2 through Fig. 4, the concave portion 40 of this embodiment has an approximately rectangular shape such as a trapezoid or rectangle in cross-sectional shape parallel to the longitudinal direction and an approximately rectangular shape such as a trapezoid or rectangle in cross-sectional shape orthogonal to the longitudinal direction.

In other words, as shown in Fig. 5, the concave portion 40 is formed by a pair of first facing surfaces 41, 41 facing each other and located on the light source 31 side and the light receiver 32 side, a pair of second facing surfaces 42, 42 provided between the first facing surfaces 41, 41 and facing each other and surrounded by these first facing surfaces 41, 41 and second facing surfaces 42, 42 and a bottom surface 43 surrounded by the first facing surfaces 41, 41 and the second facing surfaces 42, 42.

The masking detection structure 30 of this embodiment, as shown in Fig. 4, is so configured that at least a part of the detection light emitted from the light source 31 is transmitted from the inside of the casing 20 to the outside thereof through the first facing surface 41(a) located on the light source 31 side and at least a part of the detected light is transmitted to the inside of the casing 20 from the outside thereof through the first facing surface 41(b) that is located on the light receiver 32 side.

More concretely, each of the pair of the first facing surfaces 41 is an inclined surface sloped such that a separation distance becomes shorter as each of the first facing surfaces 41 moves toward the bottom of the concave portion 40.

In such a configuration, as shown in Fig. 4, a part of the detection light transmitted through the first facing surface 41(a) on the light source 31 side passes through the internal space of the concave portion 40 and is guided to the light receiver 32 through the first facing surface 41(b) on the light receiver 32 side, and the rest of the detection light transmitted through the first facing surface 41(a) on the light source 31 side is emitted from the internal space of the concave portion 40 to the outside thereof without returning to the internal space, if there is no masking material.

In accordance with this configuration, in case that a masking material such as paint is sprayed into the concave portion 40 or in case that a sheet of a masking material such as black paper is attached to the outer surface of the casing 20 to cover the concave portion 40, the amount of the light received by the light receiver 32 changes so that it is possible to detect various masking materials.

In this embodiment, as shown in Fig. 3, a step portion 411 is formed on the above-mentioned first facing surface 41(b), in other words, an inclination angle of the first facing surface 41(b) is configured to change in the middle.

In this embodiment, the step portion 411 is formed only on the first facing surface 41(b) on the receiver 32 side, and, for example, the step portion 411 is formed so that the inclination angle becomes steeper on the way from the opening to the bottom of the concave portion 40. However, the step portion 411 may be formed only on the first facing surface 41(a) on the light source 31 side, the step portion 411 may be formed on both of the first facing surfaces 41(a) and 41(b), or the step portion 411 may not be formed on both of the first facing surfaces 41(a) and 41(b).

Furthermore, as shown in Fig. 3, the masking detection structure 30 of this embodiment comprises a first reflecting member 50 that reflects the detection light emitted from the light source 31 toward the concave portion 40 and a second reflecting member 60 that reflects the detection light transmitted from the outside of the casing 20 through the concave portion 40 to the inside of the casing 20 toward the light receiver 32. However, the masking detection structure 30 does not necessarily have to be provided with these reflecting members 50 and 60 and may not have one or both of the first reflecting member 50 and the second reflecting member 60.

The first reflecting member 50 is arranged on the optical path of the detection light emitted from the light source 31 and reflects the detection light from the light source 31 toward the first facing surface 41(a) on the light source 31 side, and concretely, the first reflective ember 50 has a reflecting surface with a plurality of steps. The reflecting surface may be surrounded by a black light-absorbing member (not shown in drawings) that easily absorbs the detected light in order to prevent stray light due to unwanted reflections.

The second reflecting member 60 is arranged on the optical path of the detection light transmitted from the outside of the casing 20 to the inside thereof and reflects the detection light transmitted through the first facing surface 41(b) on the light receiver 32 side toward the light receiver 32, and concretely the second reflecting member 60 has a reflecting surface with a plurality of steps.

In this embodiment, as shown in Fig. 5, the sensing sensor 100 of this embodiment comprises a second masking detection structure 70 for detecting the masking material locating farther away than the masking material that can be detected by the masking detection structure 30, in addition to the above-mentioned masking detection structure 30.

More concretely, the second masking detection structure 70 also uses the light source 31 and the light receiver 32 of the masking detection structure 30 and comprises a light emitting area 71 for emitting the detection light emitted from the light source 31 from the inside of the casing 20 to the outside thereof and a light incident area 72 that allows the detection light to enter the inside of the casing 20 from the outside thereof.

The light emitting area 71 and the light incident area 72 are provided at different locations from the concave portion 40 in the light transmission window 33. In this embodiment, the light emitting area 71 is set on the light source 31 side of the position across the concave portion 40, and the light incident area 72 is set on the light receiver 32 side across the concave portion 40.

### [Operation and effect of this embodiment]

In accordance with the sensing sensor 100 having the above-mentioned configuration, the light emitted from the light source 31 is configured to be transmitted from the inside of the casing 20 to the outside thereof through the concave portion 40 in the light transmission window 33. Even if a sheet of a masking material of low reflectance is tightly pasted on the casing 20, the light receiving amount changes easily by covering the concave portion 40 so that it is possible to detect various masking materials.

Furthermore, since the masking material is detected by making use of the concave portion 40, unlike a conventional sensing sensor, there is no need for a light guiding member to protrude from the casing 20 so that a good appearance of the sensing sensor can be secured.

In addition, since at least a part of the light emitted from the light source 31 is transmitted from the inside of the casing 20 to the outside through the first facing surface 41(a) and the light is transmitted from the outside to the inside of the casing 20 through the second facing surface 41(b), it becomes possible to detect various kinds of masking materials such as, for example, paint applied to the first facing surface 41 (a) or the second facing surface 41(b).

Furthermore, there are some masking materials that increase or reduce the amount of the light received by the light receiver 32 depending on the material. However, since at least a part of the light emitted from the light source 31is introduced to the light receiver 32 in a normal state wherein no masking material is detected, it is possible for the masking detection structure 30 of this embodiment to detect various types of masking materials.

Moreover, since the step portion 411 is formed on the first facing surface 41(b) that forms the concave portion 40, a plurality of the optical paths can be formed between the light source 31 and the light receiver 32 so that it becomes possible to detect a greater variety of masking materials.

In addition, since the masking detection structure 30 comprises the first reflecting member 50 that reflects the detection light emitted from the light source 31 toward the concave portion 40, even when the placement and the orientation of the light source 31 are restricted, the light from the light source 31 can be securely guided to the area where the masking material is to be detected.

In addition, since the masking detection structure 30 comprises the second reflecting member 60 that reflects the detection light transmitted through the concave portion 40 to the inside of the casing 20 toward the light receiver 32, even when the placement and the orientation of the light receiver 32 are restricted, the light from the area where the masking material is to be detected can be securely guided to the light receiver 32.

### [Other embodiments]

This invention is not limited to the above-mentioned embodiments.

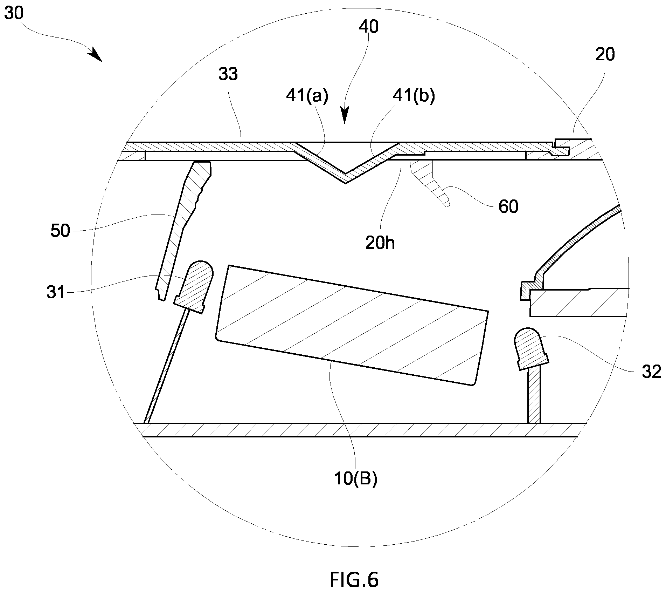

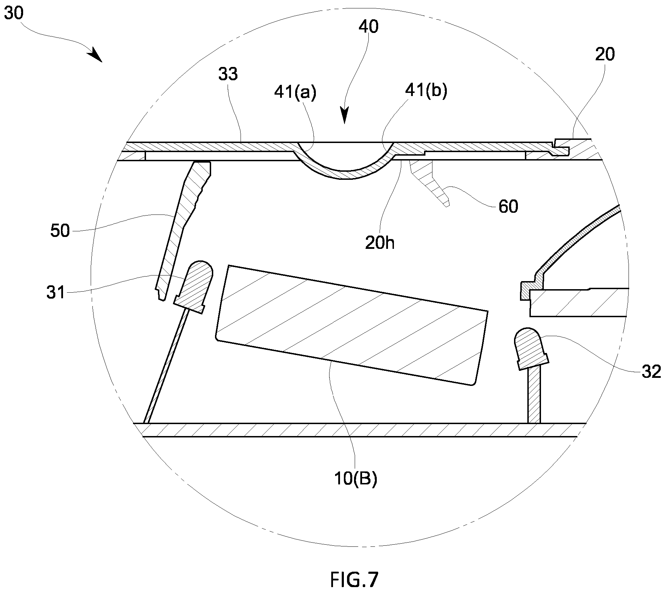

For example, the concave portion 40 has the approximately rectangular cross section perpendicular to the longitudinal direction in the above-mentioned embodiment, however, the cross section may have a triangular cross section perpendicular to the longitudinal direction, as shown in Fig. 6, or may have a U-shaped cross section perpendicular to the longitudinal direction, as shown in Fig. 7.

In the above-mentioned embodiment, the detection light is transmitted from the inside of the casing 20 to the outside thereof through the first facing surface 41(a) on the light source 31 side, however, the detection light may be transmitted from the inside of the casing 20 to the outside thereof through the bottom surface 43 of the concave portion 40.

In addition, in the above embodiment, the detection light is transmitted from the outside of the casing 20 to the inside thereof through the first facing surface 41(b) on the light receiver 32 side, however, the detection light may be transmitted from the outside of the casing 20 to the inside thereof through the bottom surface 43 of the concave portion 40.

Furthermore, in the above-mentioned embodiment, a pair of the first facing surfaces 41 are inclined surfaces whose separation distance becomes shorter as they move toward the bottom surface 43, however, these first facing surfaces 41 may be inclined surfaces whose separation distance becomes longer as they move toward the bottom surface 43, or one or both of these first facing surfaces 41 may be upright surfaces that are orthogonal to the bottom surface 43.

In addition, in the above-mentioned embodiment, the masking detection structure 30 is explained as being provided for the sensor part 10(B) of the microwave method, however, the masking detection structure 30 may also be provided for a sensor part 10 of a detection method other than this detection method.

The masking detection structure 30 is not limited to detecting a masking material after the masking material is attached to the sensing sensor 100, however, the masking detection structure 30 may be configured to detect a masking material (for example, a masking material approaching the sensing sensor) before the masking material is attached to the sensing sensor 100 to prevent masking acts from occurring.

Furthermore, as the detection methods of the sensing sensor 100, the passive infrared detection method and the microwave detection method are given as examples in the above-mentioned embodiment, however, in addition to these detection methods, other detection methods may be adopted to detect the object to be detected such as the AIR method that detects an object to be detected by projecting near-infrared rays as detection waves and receiving the near-infrared rays reflected from the object, the method that detects disturbances of electromagnetic waves, and the method that detects the object to be detected by using a switch linked to opening and/or closing of a physical shielding means that separats the inside and the outside of an area.

It goes without saying that this invention is not limited to the above-mentioned embodiments and may be variously modified without departing from a spirit of this invention.

### Applications in industry

According to the present claimed invention, it is possible to secure the appearance of the product while enabling detection of various masking materials such as those with low reflectance or in sheet form.

## Claims

1. A sensing sensor comprising a sensor part that detects an object to be detected and a masking detection structure that detects a masking material that nullifies a detection function of the sensor part, wherein
the masking detection structure comprises
a light source and a light receiver housed in a casing together with the sensor part, and
a light transmission window that closes an opening formed in the casing, and
the light transmitting window has a concave portion recessed toward an inside of the casing, and light emitted from the light source is transmitted from the inside of the casing to an outside thereof through the concave portion.

2. The sensing sensor described in claim 1, wherein
at least a part of the light emitted from the light source is transmitted from the inside of the casing to the outside thereof through one of opposing surfaces that form the concave portion and that face each other, and the light is transmitted from the outside of the casing to the inside thereof through the other of the opposing surfaces.

3. The sensing sensor described in claim 1 or claim 2, wherein
the masking detection structure is configured such that at least a part of the light emitted from the light source is guided to the light receiver in a normal state in which the masking material is not detected.

4. The sensing sensor described in claim 2, wherein
a step portion is formed at least one of the pair of the opposing surfaces.

5. The sensing sensor described in either one of claim 1 through claim 4, wherein
the masking detection structure further comprises a reflecting member that reflects the light emitted from the light source toward the concave portion, or a reflecting member that reflects the light transmitted from the outside of the casing to the inside thereof through the concave portion toward the light receiver.
